Europäisches Patentamt

European Patent Office

Office européen des brevets

(11) Publication number: **0 268 843 B1**

# EUROPEAN PATENT SPECIFICATION

(45) Date of publication of patent specification: **18.03.92**

(51) Int. Cl.5: **G03C 3/00**, C08L 23/06, C08K 5/00

(21) Application number: **87115614.7**

(22) Date of filing: **23.10.87**

The file contains technical information submitted after the application was filed and not included in this specification

(54) **Container for photographic film cartridge.**

(30) Priority: **30.10.86 JP 256831/86**

(43) Date of publication of application:
**01.06.88 Bulletin 88/22**

(45) Publication of the grant of the patent:
**18.03.92 Bulletin 92/12**

(84) Designated Contracting States:
**DE GB NL**

(56) References cited:
**EP-A- 4 651**
**CA-A- 740 031**
**US-A- 3 455 863**

**R. GACHTER et al.: "Taschenbuch der Kunststoff-Additive", 1979, pages 252-253, Carl Hanser Verlag, Munich, DE;**

**PATENT ABSTRACTS OF JAPAN, vol. 6, no. 135 (C-115)[1013], 22nd July 1982; & JP-A-57 59 939 (SHOWA DENKO K.K.) 10-04-1982**

**PATENT ABSTRACTS OF JAPAN, vol. 4, no. 16 (C-72), 7th February 1980, page 24 C 72; & JP-A-54 149 752 (MITSUI TOATSU KAGAKU**

K.K.) 24-11-1979

(73) Proprietor: **FUJI PHOTO FILM CO., LTD.**
**No. 210, Nakanuma Minami-Ashigara-shi Kanagawa-ken(JP)**

(72) Inventor: **Akao, Mutsuo**
**c/o Fuji Photo Film Co. Ltd. 2-1, Ougi-cho 1-chome**
**Odawara-shi Kanagawa(JP)**

(74) Representative: **Patentanwälte Grünecker, Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a cap of a container for photographic film cartridge.

A conventional cap of a container for a photographic film cartridge is made of a high-pressure branched low-density polyethylene (LDPE) resin having a density of 0.927 g/cm$^3$ (ASTM D 1505) and a melt index of 4.0 g/10 min (ASTM D 1238, at 190°C, MI). This resin is superior in flexibility at a low temperature, fitness of the cap and the body, compressive strength, little burr and little gate mark.

However, when using the LDPE resin, molding troubles, such as a short shot of the molten resin, warp, twist and deformation, frequently occur. Its insufficient heat stability is also a problem. That is, the LDPE resin staying in a continuous molding machine at its screw, manifold, hot runner or other places is gradually colored brown or dark brown by heat. This colored resin is gradually extruded to cause coloring troubles. The generating rate of the colored products is as high as 3 to 10%, and these products should be extracted by a checker or a checking machine. A more important problem is that when coloring troubles once occur, the molding machine must be disassembled and washed to remove the colored resin completely. Much effort and a long time are spent for this cleaning work. Since the fluidity of the LDPE resin is not good because of its low MI, its temperature should be high at the molding. As a result, the molding cycle becomes long.

In order to solve the coloring problem, when the cap is colored by blending carbon black, not only the appearance of the container becomes unfavourable but also the manufacturing costs are elevated. Furthermore, when the whole container is colored black, the inside of the container becomes hot in the sunshine. This causes degradation of the photographic film contained therein.

EP-A-4651 discloses an article molded from a high pressure polyethylene resin having a melt index of 28 g/10 min, a density of 0,926 g/cm$^3$ and an excellent moldability and the use of a lubricant in a suitable amount. JP-A-57-59939 discloses a polyolefin resin composition for injection molding wherein a saturated or unsaturated aliphatic amide is used as lubricant.

A metal container is also known (e.g. Japanese Utility Model KOKOKU No. 58-46413). However, a metal container is expensive, and its mass-producibility is inferior to a plastic container. Accordingly, it is not utilized at present.

It is the object of the present invention to provide a cap of a container for a photographic film cartridge which is produced without coloring troubles nor molding troubles.

Said object is achieved by a cap of a container for a photographic film cartridge which cap is made of a high-pressure branched low density polyethylene resin having a density of 0,920 to 0,935 g/cm$^3$ and containing 0,01 to 0,9 wt.% of a lubricant characterized in that said polyethylene resin has a melt index of 10 to 50 g/10 min and a molecular weight distribution of 3,3 to 8,5.

Figures 1 to 4 are sectional side views indicating several examples of the container to which the cap of the present invention is applied.

Figures 5 to 9 are partial sectional views indicating the fitting structure of some other caps of the present invention.

Figure 10 is a sectional view of a mold for a stack molding.

The cap of the invention is composed of a particular high-pressure branched low-density polyethylene (LDPE) resin characterized by a specific melt index, density, molecular weight distribution and lubricant.

The melt index (MI) of the LDPE resin is 10 to 50 g/10 min, preferably 18 to 35 g/10 min. If it is lower than 10 g/10 min the fluidity of the molten resin becomes worse, and molding troubles, such as warp, twist and short shot, occur. The molding cycle is also elongated. In order to improve the moldability, the molding temperature should be raised. As a result, coloring troubles frequently occur, and resin remaining at the gate also becomes a problem. Power consumption increases, and the molding cycle is elongated because of elongation of the cooling time. On the other hand, if it is higher than 50 g/10 min, the resin is too plastic, and molding troubles such as collapse of the rib of cap, ejection troubles, stringiness, resin remaining at the gate and burr frequently occur.

The density of the LDPE resin is 0.920 to 0.935 g/cm$^3$. If it is lower than 0.920 g/cm$^3$ the heat resistance is inferior, and coloring troubles occur. Besides, the resin is too plastic, and deformation of the rib of the cap fitted into the groove of the container body occurs when it is taken out of its mold. Moreover, the fitting strength of the cap to the container body is weak, and therefore, sealability and moisture-proofness become insufficient to result in degradation of the photographic film packaged therein. If it is higher than 0.935 g/cm$^3$, the resin becomes too rigid, and the fitness of the cap to the body becomes worse. As a result, the cap is liable to detach when dropped, and the moisture permeability becomes too high.

The molecular weight distribution of the LDPE resin is 3.3 to 8.5 (weight average molecular weight

$\overline{M}$w/number average molecular weight $\overline{M}$n by the GPC method). The LDPE resin having this molecular weight distribution is excellent in its moldability, and its dimensional variation according to the molding process is small, irrespective of the manufacturing process such as an autoclave method or a tubular method. If it is less than 3.3, the injection moldability becomes worse, and a short shot occurs event though the MI of the resin is high. Since other molding troubles also increase, a high speed injection molding in the case of more than 12 cavities is difficult. If it is more than 8.5, the mold shrinkage is different according to the cooling period, and the size of the molded cap varies widely. Particularly, when the cooling period is shortened, the mold shrinkage becomes large to produce off-specification products.

The manufacturing method of the LDPE resin is not limited, however, a LDPE resin manufactured by an autoclave method is preferable. Commercial LDPE resins are "SUMIKATHENE" (SUMITOMO CHEMICAL CO., LTD.) "MITSUBISHI POLYETHY" (MITSUBISHI PETROCHEMICAL CO- LTD.), "MIRASON" (MITSUI POLYCHEMICALS CO. LTD.), "NUC POLYETHYLENE" (NIPPON UNICAR CO. LTD.) "UBE POLYETHYLENE" (UBE INDUSTRIES LTD.), "NIPOLON" (TOYO SODA MANUFACTURING CO. LTD.), "SHOLEX" (SHOWA DENKO K.K.), "NOVATEC-L" (MITSUBISHI CHEMICAL INDUSTRIES LTD.), "SUNTEC-LD" (ASAHI CHEMICAL INDUSTRIES CO. LTD.).

The resin composing the cap may contain other thermoplastic resin(s) blendable with the LDPE resin. Even in such a case, the content of the LDPE resin must be more than 50 wt. % of the cap. A suitable thermoplastic resin for blending with the LDPE resin is a low-pressure linear low-density polyethylene (L-LDPE) resin which is a copolymer of ethylene and α-olefin, and a L-LDPE resin the α-olefin of which is butene-1 is particularly preferable.

The lubricant does not only improve the injection of the LDPE resin into the mold and the taking out of the cap from the mold but also improves the fitness of the cap to the body. It also makes the detachment of the cap easy, and the cap is not deformed at the detachment. The content of the lubricant is 0.01 to 0.9 wt. %, preferably 0.1 to 0.5 wt. %. When the content is less than 0.01 wt.%, the moldability disimproves. When the content is more than 0.9 wt. %, the cap becomes sticky, and thereby, the molding cylce is elongated. Pelletizing is also a problem. In some cases, plasticization of the resin becomes difficult. Suitable lubricants are fatty acid amide lubricants, particular silicone lubricants, and alkylamine lubricants and in the case of an uncolored natural LDPE resin, fatty acid amide lubricants are preferable. The bleeding out of these lubricants is slow, and they do not badly affect the photographic film placed in the container. Examples of commercial lubricants suitable for the cap of the present invention include:

Oleic acid amide lubricants; "ARMOSLIP-CP" (Lion akzo Co., Ltd.), "NEWTRON" and "NEWTRON E-18" (Nippon Fine Chemical Co., Ltd.), "AMIDE-O" (Nitto Kagaku K.K.), "DIAMID 0-200" and "DIAMID G-200" (Nippon Kasei Chemical Co., Ltd.), "ALFLOW E-10" (Nippon Oil and Fats Co., Ltd.)

Erucic acid amide lubricants; "ALFLOW P-10" (Nippon Oil and Fats Co., Ltd.)

Stearic acid amide lubricants; "ALFLOW S-10" (Nippon Oil and Fats Co.,Ltd.), "NEWTRON 2" (Nippon Fine Chemical Co., Ltd.), "DIAMID 200" (Nippon Kasei Chemical Co., Ltd.)

Bis fatty acid amide lubricants; "BISAMIDE" (Nitto Kagaku K.K.), "DIAMID-200 BIS" (Nippon Kasei Chemical Co., Ltd.), "ARMOWAX-EBS" (Lion Akzo Co., Ltd.)

Silicone lubricants; Dimethylpolysiloxanes, carboxyl-modified dimethylpolysiloxanes, etc. (Sinetsu Chemical Co., Ltd., Toray Silicone Co., Ltd., Nippon Unicar Co., Ltd., Dow Corning, etc.)

Alkylamine lubricants; "ELECTROSTRIPPER TS-2" (Kao Corp.)

An oxidation inhibitor is preferably blended in order to prevent coloring of the resin, when the resin temperature is raised to improve the fluidity. Most of the coloring trouble can be removed by the synergistic effect of the addition of an oxidation inhibitor and lowering of the resin temperature caused by the LDPE resin. Preferable oxidation inhibitors are phenol oxidation inhibitors and phosphite oxidation inhibitors. However, other oxidation inhibitors capable of preventing coloring troubles without affecting a bad influence upon the photographic film may also be utilized. A suitable content of the oxidation inhibitor is 0.01 to 1.5 wt. %, preferably 0.03 to 0.3 wt. %. When the content is less than 0.01 wt. %, the blending effect becomes insufficient.

When the content is more than 1.5 wt.%, it badly affects the photographic film utilizing an oxidation-reduction reaction, such as fogging or lowering of sensitivity. In this regard, the content is preferably less. The phenol oxidation inhibitors include n-octadecyl-3-(3',5'-di-t-butyl-4'-hydroxyphenyl)propionate, 2,6-di-t-butyl-4-methylphenol, 2,6-di-t-butyl-p-cresol , 2,2'-methylenebis(4-methyl-6-t-butylphenol), 4,4-thiobis-3-methyl(3-methyl-6-t butylphenol), 4,4'-butylidenebis(3-methyl-6-t-butylphenol), stearyl-$\beta$-(3,5-di-4-butyl-4-hydroxyphenyl) propionate, 1,1,3-tris(2-methyl-4-hydroxy-5-t-butylphenyl)butane, 1,3,5-trimethyl-2,4,6-tris-(3,5-di-t-butyl-4-hydroxybenzyl) benzene and tetrakis[methylene-3-(3',5'-di-t-butyl-4'-hydroxyphenyl)-propionate]methane. The phosphorus-containing oxidation inhibitors include trinonylphenylphosphite and triphenylphosphite. Commercial products belonging to the phenol oxidation inhibitors include various "IRGANOX" (CIBA-GEIGY AG) and "SUMILIZER BHT", "SUMILIZER BP-76", "SUMILIZER WX-R" and "SUMILIZER BP-101" (SUMITOMO CHEMICAL CO., LTD.). The phosphite oxidation inhibitors include trinonylphenylphosphite and triphenylphosphite. Two or more oxidation inhibitors may be combined to use.

The bending rigidity of the cap is preferably 1,200 to 4,000 kg/cm$^2$ (ASTM D-747) in view of the injection moldability such as taking out of the mold, the stiffness, the fitness to the container body and sealability. Besides, it is preferably less than one half of the bending rigidity of the container body in view of the fitness to the container body.

A coloring material may be blended, if necessary. As coloring material, dyes, pigments, metal powders, metal fibers and metal flakes are usable. Examples of the coloring material are as follows:

White coloring material; Titanium oxide, calcium Carbonate, mica, zinc oxide, clay, barium sulfate, calcium sulfate and magnesium silicate.

Yellow coloring material; Titanium yellow, yellow iron oxide, chrome titanium yellow, disazo pigment and isoindolenone.

Red coloring material; Red iron oxide, disazo pigment, berlin pigment, monoazo lake pigment, and condensed azo pigment.

Blue coloring material; Cobalt blue, ultramarine and Cyanine Blue.

Green coloring material; Chromium oxide green, titanium green and Cyanine Green.

Black coloring material; Carbon black, and black iron oxide.

Silver coloring material; Aluminum powder, aluminum paste, and tin powder.

Among them a silver coloring material and carbon black are preferable becausee of the shielding of coloring troubles. In addition, carbon black has a synergistically antioxidative effect. A silver coloring material reflects the sunlight to prevent a temperature rise, and it also brings a favourable appearance. The content of the coloring material is preferably less than 3 wt. %, such as 0.1 to 1 wt. %.

Various additives in addition to the above mentioned may be added to the resin for the cap. Examples of the additives are described below.

1) Plasticizer;

phthalic acid ester, glycol esters, fatty acid esters and phosphoric acid esters.

(2) Stabilizer;

lead compounds, cadmium compounds zinc compounds, alkaline earth metal compounds and organic tin compounds.

(3) Antistatic agent;

cationic surfactants, anionic surfactants, nonionic surfactants and ampholytic surfactants.

(4) Flame retardant;

phosphoric acid esters, phosphoric acid ester halides, halides, inorganic materials and polyols containing phosphorous.

(5) Filler;

alumina, kaolin, clay, calcium carbonate, mica, talc, titanium oxide and silica.

(6) Reinforcing agent;

glass lobing, metallic fiber, glass fiber, glass milled fiber and carbon fiber.

(7) Nucleating agent ;

inorganic nucleating agent and organic nucleating agents (such as dibenzylidenesorbitol)

(8) Vulcanizing agent;

vulcanization accelerator and acceleration assistant.

(9) Deterioration preventing agent;

ultraviolet absorber, metal deactivator and peroxide decomposing agent.

(10) Coupling agent;

silane compounds, titanium compounds, chromium compounds, and aluminum compounds.

11) Various thermoplastic resins, rubbers.

Particularly, polyolefin thermoplastic resins are preferable.

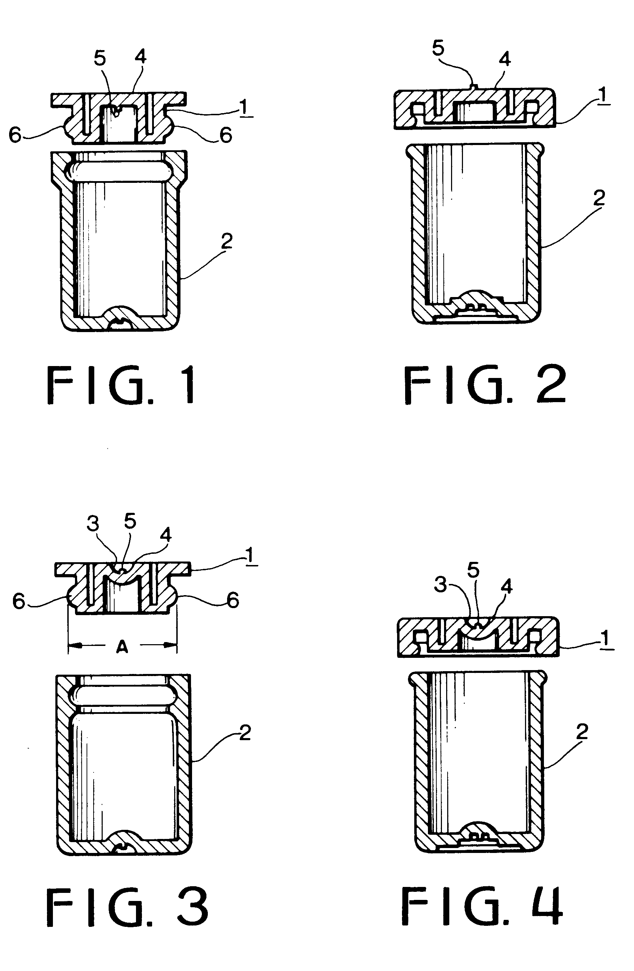

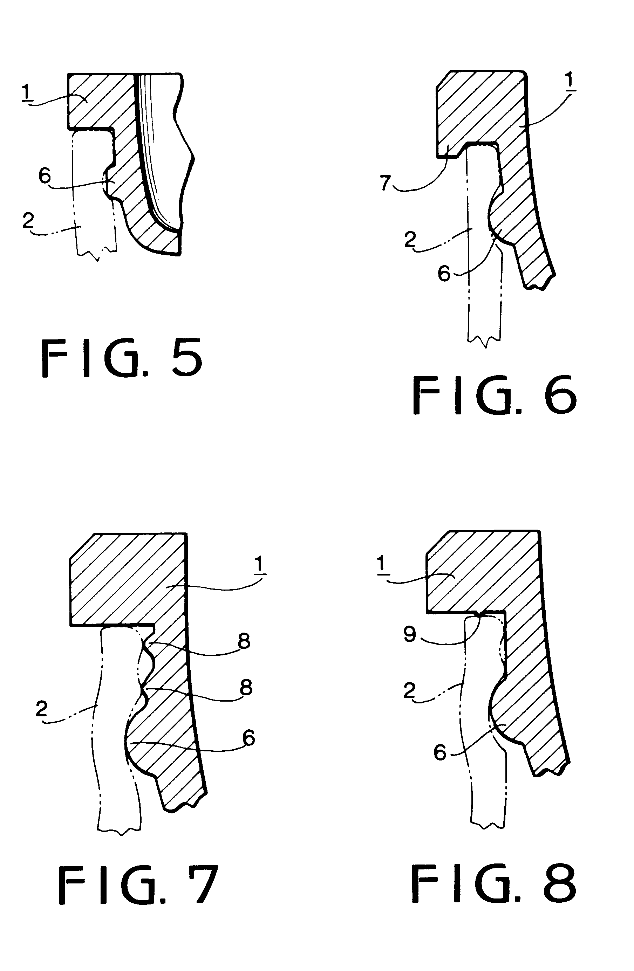

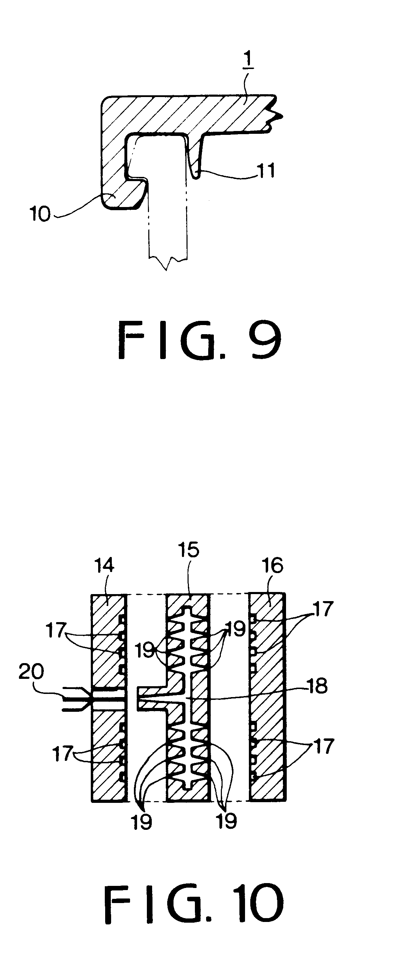

The cap of the invention is of a fitting type. Its form is not limited. However, the caps in figures 1 and 3 are preferable in view of their good fitness to the body of the container to bring sufficient seal and readiness of detachment. In the drawings, 1 represents a cap, 2 represents a container body, 4 represents a gate portion to inject a molten resin into the mold cavity, 5 represents a gate mark and 6 represents a rib. Particularly, the caps of figures 1 and 3 are preferable because it can be detached by one hand. As shown in figures 3 and 4, an indent 3 may be formed around the gate mark 5, and the gate mark 5 is provided in it so as not to project outwardly. This structure is preferable in points of appearance and molding. Since the gate mark 5 does not project outwardly, an after-treatment is not necessary. Stringiness troubles also decrease. As shown in figure 5, the top of the rib 6 may be cut off, and as shown in figure 6, an engaging

EP 0 268 843 B1

edge 7 may be formed. Besides, as shown in figure 7, one or more project rings 8 may be formed above the ribs 6, and as shown in figure 8, a project ring 9 may be formed on the reverse face of the flange of the cap to touch the upper edge of the container body. In addition, as shown in figure 9, the lower end of the skirt portion is projected into the inside in the form of an engaging portion 10, and a grasp ring piece 11 may be provided so as to grasp the upper edge of the container body from the inside.

The molding method of the cap is not limited, and the cap may be produced by a hot runner type injection molding, an inter mold vacuum injection molding or a stack molding. However, the resin used in the invention is effective in the case of a single mold molding many products such as more than 20 products at once, ant it is further effective in the case of a stack mold (double mold) having cavities on both sides of the mold, as shown in figure 10. This mold comprises a stationary mold 14, an intermediate plate 15 and a moving mold 16. 12 cavities (not limited to this number) are formed in both the stationary mold 14 and the moving mold 16, respectively. The intermediate plate 15 is provided with a manifold 18, and gates 19 are formed at each manifold position corresponding to the cavities 17 of the stationary mold 14 and the moving mold 16. 20 indicates an injection tube.

Since the cap of the container for a photographic film cartridge of the invention is composed of a particular LDPE resin having a high MI, a suitable density and a small molecular weight distribution and a prescribed amount of a lubricant blended thereto, the fluidity of the resin is more than 2.5 times that of the conventional resin. Since its melt viscosity is low even at a low temperature, the molten resin smoothly flows in a molding machine without staying in the screw or other portions. Accordingly, coloring troubles hardly occur. Since the mold shrinkage of this resin is small, the cook period at molding can be shortened. As a molding cycle can also be shortened because of the low temperature and the fast cooling. Since the moldability of the resin is good, molding troubles such as warp, stringiness, weld line, bottom sink mark and short shot hardly occur even at a low temperature. Particularly in the case of using the mold for molding many products such as more than 24 products at once, uniform products can be obtained because of the decrease in the difference of the cooling efficiency caused by the position of the cavity and the decrease in flow variation caused by a slight difference in the resin temperature, gate diameter or the like. Moreover, in the case of stack molding capable of molding more than 16 products per one mold at once, the flow rate of the molten resin can easily be balanced between the stationary mold and the moving mold, and burr and short shot do not occur. Thus, the caps molded are uniform, and the dimensional variation among the products from respective cavities is very little.

The following examples illustrate the invention.

EXAMPLES

Three examples of the cap of the invention, two comparative caps and one conventional cap were molded by using the molding machine "IS 75E" (manufactured by TOSHIBA MACHINE CO., LTD.) at a mold clamping pressure of; 75000 kg (75 t). The molding number per once was 2, and the type of runner was a hot runner.

The cap for a photographic film cartridge container of Example 1 was molded by injection molding using a LDPE resin having a MI of 35 g/10 min a density of 0.924 g/cm$^3$ and a molecular weight distribution of 5.24 blended with 0.3 wt. % of an oleic acid amide lubricant ("ARMOSLIP CP", LION AKZO CO., LTD.).

The cap for the photographic film cartridge container of Example 2 was molded by injection molding using a LDPE resin having a MI of 25 g/10 min, a density of 0.926 g/cm$^3$ and a molecular weight distribution of 3.76 blended with the same amount of the same lubricant as in Example 1.

The cap for the photographic film cartridge container of Example 3 was molded by injection molding using a LDPE resin having a MI of 18 g/10 min, a density of 0.926 g/cm$^3$ and a molecular weight distribution of 4.22 blended With the same amount of the same lubricant as in Example 1.

Comparative cap 1 was molded by injection molding using a LDPE resin having a MI of 16 g/10 min. a density of 0.926 g/cm$^3$ and a molecular weight distribution of 3.08 blended with the same amount of the same lubricant as in Example 1.

Comparative cap 2 was molded by injection molding using the same LDPE resin as in Example 1 not blended with a lubricant.

A conventional cap was molded by injection molding a LDPE resin having a MI of 4 g/10 min. a density of 0.927 g/cm$^3$ and a molecular weight distribution of 9.21 blended with 0.03 wt. % of the same lubricant as in Example 1.

The shapes of the above six caps were the same as shown in figure 3. The container body was composed of a propyleneethylene random copolymer resin, and its shape was the same as shown in figure 3.

5

Various properties of the molded caps are shown in Table 1.

Table 1

| | Unit | Invention | | | Comparative | | Conventional |
|---|---|---|---|---|---|---|---|
| | | 1 | 2 | 3 | 1 | 2 | |
| MI | g/10 min | 35 | 25 | 18 | 16 | 35 | 4 |
| Density | g/cm$^3$ | 0.924 | 0.926 | 0.926 | 0.926 | 0.924 | 0.927 |
| M.W. Distribution | | 5.24 | 3.76 | 4.22 | 3.08 | 5.24 | 9.21 |
| Lubricant Content | wt. % | 0.3 | 0.3 | 0.3 | 0.3 | – | 0.03 |
| Minimum Cycle Time | s | 4.5 | 4.5 | 4.7 | 5.8 | 10.3 | 8.0 |
| Injection Pressure | kg/cm$^2$ | 70 | 80 | 85 | 93 | 82 | 118 |
| Mold Shrinkage | % | 0.20 | 0.18 | 0.21 | 0.24 | Difficult to mold | 0.48 |
| Cap Detachment | – | B | A | A | A | " | D |
| Fitting Strength | kg | 1.62 | 1.82 | 1.73 | 1.87 | " | 1.17 |
| Moisture Permeability | mg/24 h | 2.4 | 1.7 | 2.1 | 1.6 | " | 4.3 |
| Optimum Molding Temperature | °C | 158 | 163 | 172 | 205 | " | 215 |
| Coloring Trouble | – | A | A | B | E | " | E |
| Molding Trouble | – | A | A | A | E | " | D |
| Dimensional Variation | – | B | A | A | B | " | E |

The evaluation in Table 1 were carried out as follows.

A very excellent
B excellent
C practical
D having a problem

E IMPRACTICAL

The testing methods are as follows:

Melt Index; ASTM D-1238 (at 190°C)

Density; ASTM D-1505

Molecular Weight Distribution; Each LDPE resin was dissolved in o-dichlorobenzene in a concentration of 3 mg/ml, and measured by gel permeation chromatography at 135°C.

Minimum Cycle Time; The shortest time of one shot of injection-cooling-taking out capable of obtaining conforming articles.

Injection Pressure; Actual values indicated

Mold Shrinkage; The shrinkage of A indicated in FIGURE 3 at the time when the cooling time was shortened 1 s by shortening the molding cycle time from 7 s to 6 s

$$\frac{\left(\begin{array}{c}\text{Rib diameter}\\ \text{at 7 s}\end{array}\right) - \left(\begin{array}{c}\text{Rib diameter}\\ \text{at 6 s}\end{array}\right)}{\text{Rib diameter at 7 s}} \times 100$$

Cap Detachment; Measured by using each cap molded at a cycle time of 6 s, A photographic film cartridge containing a photographic film of 36 exposures ("Fuji Color HR-100", 36 Ex.) was placed in each container. Each container was dropped from 5 m height to the concrete floor, and the number of cap-detached containers were counted. In order to avoid the detachment of the cap caused by breakage of the container body, a container body made of polypropylene resin containing polyethylene in a high content was used.

Fitting strength; Measured by using each cap molded at a cycle time of 6 s A spring balance was provided with a grip member. Each cap was grasped by the grip member, and the spring balance was pulled in the upward direction. The force necessary to detach each cap was measured.

Moisture Permeability; Measured by using each cap molded at a cycle time of 6 s. About 4 g of calcium chloride was exactly weighed, and placed in each container. Each cap was attached, and the container was allowed to stand in a room controlled at 40°C and 90 % in humidity for 24. The increase in the weight of calcium chloride was exactly weighed by a precision balance, and the increase amount was employed as moisture permeability.

Optimum Molding Temperature; The resin temperature at the optimal molding condition for each resin where molding trouble hardly occurs, in the case of using a stack mold for molding 48 pieces at once.

Coloring troubles; Coloring degree of the product produced continuously using a stack mold for molding 48 pieces at once at the optimal temperature for each resin where molding troubles hardly occur.

Molding Troubles; Occurrence of molding troubles such as warp, bottom sink mark, short shot and burr at the optimal molding condition for each resin, in the case of using a stack mold for molding 48 pieces at once.

Dimensional Variation; Dimensional variation among the molded products of each cavities, in the case of using a stack mold for molding 48 pieces at once.

In the above test methods of optimum molding temperature, coloring troubles, molding troubles and dimensional variation, the molding was carried out by using the molding, machine "NESTAL" (SUMITOMO HEAVY INDUSTRIES LTD.) at a mold clamping pressure of 150000 kg (150 t). The type of runner was a hot runner. The mold employed was as shown in figure 10, and 48 pieces of the cap were molded at one shot. That is, 24 pieces were molded by the stationary mold 14 and the remaining 24 pieces were molded by the moving mold 16.

## Claims

1. A cap of a container for a photographic film cartridge which cap is made of a high-pressure branched low-density polyethylene resin having a density of 0.920 to 0.935 g/cm$^3$ and containing 0.01 to 0.9 wt.% of a lubricant **characterized in that** said polyethylene resin has a melt index of 10 to 50 g/10 min, and a molecular weight distribution of 3.3 to 8.5.

2. The cap of claim 1 wherein said lubricant is selected from the group consisting of an oleic acid amide, an erucic acid amide, a stearic acid amide and a bis fatty acid amide.

EP 0 268 843 B1

3. The cap of claim 1 wherein said polyethylene resin further contains 0.01 to 1.5 wt.% of a phenol oxidation inhibitor and/or a phosphite oxidation inhibitor.

4. The cap of claim 1 wherein said polyethylene resin further contains a coloring material.

5. The cap of claim 1 wherein the content of said polyethylene resin is more than 50 wt.%, and it further contains a low-pressure linear low-density polyethylene resin.

**Revendications**

1. Couvercle d'une boîte pour cartouche de pellicule photographique, ce couvercle étant composé d'une résine de polyéthylène basse densité, ramifié, haute pression, ayant une densité de 0,920 à 0,935 g/cm$^3$ et contenant 0,01 à 0,9 % en poids d'un lubrifiant, caractérisé en ce que ladite résine de polyéthylène a un indice de fusion de 10 à 50 g/10 min, et une répartition de masse moléculaire de 3,3 à 8,5.

2. Couvercle selon la revendication 1, dans lequel ledit lubrifiant est sélectionné parmi le groupe comprenant un amide d'acide oléique, un amide d'acide érucique, un amide d'acide stéarique et un amide d'acide gras bis.

3. Couvercle selon la revendication 1, dans lequel ladite résine de polyéthylène comprend en outre 0,01 à 1,5 % en poids d'un antioxydant au phénol et/ou d'un antioxydant au phosphite.

4. Couvercle selon la revendication 1, dans lequel ladite résine de polyéthylène comprend en outre une matière colorante.

5. Couvercle selon la revendication 1, dans lequel la proportion de ladite résine de polyéthylène est supérieure a 50 % en poids, elle contient en outre une résine de polyéthylène basse densité, linéaire, basse pression.

**Patentansprüche**

1. Deckel für einen Behälter für eine fotographische Filmpatrone, wobei der Deckel aus einem verzweigten Hochdruckpolyethylenharz mit niedriger Dichte mit einer Dichte von 0,920 bis 0,935 g/cm$^3$ hergestellt ist und 0,01 bis 0,9 Gew.-% eines Gleitmittels enthält,
**dadurch gekennzeichnet,**
daß das Polyethylenharz einen Schmelzindex von 10 bis 50 g/10 min und eine Molekulargewichtsverteilung von 3,3 bis 8,5 besitzt.

2. Deckel nach Anspruch 1, worin das Gleitmittel aus der Gruppe, bestehend aus einem Oleinsäureamid, einem Erukasäureamid, einem Stearinsäureamid und einem Bisfettsäureamid, gewählt wird.

3. Deckel nach Anspruch 1, worin das Polyethylenharz weiterhin 0,01 bis 1,5 Gew.-% eines Phenol-Oxidationsinhibitors und/oder eines Phosphit-Oxidationsinhibitors enthält.

4. Deckel nach Anspruch 1, worin das Polyethylenharz weiterhin ein Färbungsmittel enthält.

5. Deckel nach Anspruch 1, worin der Gehalt an Polyethylenharz mehr als 50 Gew.-% beträgt und er weiterhin ein lineares Niedrigdruckpolyethylenharz mit niedriger Dichte enthält.

8

EP 0 268 843 B1

FIG. 1

FIG. 2

FIG. 3

FIG. 4

# FIG. 5

# FIG. 6

# FIG. 7

# FIG. 8

FIG. 9

FIG. 10